# FASCICULE DE BREVET EUROPEEN

(11) **EP 0 947 713 B1**
(45) Date de publication et mention de la délivrance du brevet: **23.07.2003**
(21) Numéro de dépôt: 99400812.6
(22) Date de dépôt: 02.04.1999
(51) Int. Cl.: F16B 13/14, B25B 13/06, B25B 13/48

(54) **Tige de fixation à un support en béton**
Befestigung von einer Stange auf einem Betonträger
Fastening a rod to a concrete support

(30) Priorité: 02.04.1998 FR 9804107
(43) Date de publication de la demande: 06.10.1999
(73) Titulaire: SOCIETE DE PROSPECTION ET D'INVENTIONS TECHNIQUES SPIT, 26501 Bourg-Les-Valence Cédex (FR)
(72) Inventeur: Pourtier, Fabrice, 26800 Portes les Valence (FR); Barthomeuf, Jean-Paul, 26300 Bourg de Peage (FR)
(74) Mandataire: Bloch, Gérard

(56) Documents cités:
- DE-A- 19 523 867
- DE-A- 19 634 912
- FR-A- 2 435 625
- GB-A- 2 034 850
- GB-A- 2 071 248
- US-A- 4 393 638
- US-A- 4 652 193

## Description

L'invention concerne une tige de fixation destinée à être ancrée dans un trou ménagé dans un support, et notamment dans un support en béton, par durcissement d'une substance chimique d'ancrage dans le trou, autour d'une portion de la tige introduite dans celui-ci.

Une telle tige de fixation comprend généralement une extrémité d'entraînement destinée à être reliée à un outil d'entraînement par l'intermédiaire d'un adaptateur, une portion de fixation, filetée, sur laquelle peut être vissé un écrou de serrage, et une portion d'ancrage destinée à être introduite dans le trou du support.

Pour ancrer une tige de fixation de ce type dans du béton, on perce au préalable un trou dans le béton, dans lequel on place une capsule en verre contenant la substance chimique d'ancrage généralement constituée d'une résine époxy, de grains de sable et d'un catalyseur. Puis on introduit dans le trou la portion d'ancrage de la tige de fixation tout en entraînant la tige en rotation. Sous l'action de l'introduction et de l'entraînement en rotation de la tige, la capsule se brise et libère la substance d'ancrage qui se répand dans le trou autour de la portion d'ancrage de la tige puis se durcit en ancrant ainsi la tige dans le béton.

Pour que l'ancrage soit de qualité, il convient de bien mélanger tous les composants de la substance d'ancrage et de bien les répandre uniformément tout autour de la portion d'ancrage de la tige. Or il arrive bien souvent que le mélange se fasse mal et/ou que la substance ne se répartisse pas convenablement.

Par US 4393638, on connaît une tige de fixation comportant une portion d'ancrage avec des sillons et des crêtes formant des moyens de turbine, destinés à malaxer la substance d'ancrage.

La demanderesse a quant à elle cherché à proposer une tige de fixation encore plus efficace que celles de l'art antérieur pour mélanger la substance d'ancrage.

A cet effet, l'invention concerne une tige de fixation à un support comprenant une portion de fixation, une portion d'entraînement en rotation, une portion d'ancrage, destinée à être introduite dans un trou ménagé dans le support, et des moyens de turbine, destinés à malaxer la substance d'ancrage, l'entraînement en rotation de la tige étant destiné à assurer la répartition, autour de la portion d'ancrage, d'une substance d'ancrage prévue pour durcir et ancrer la tige dans le support, tige caractérisée par le fait que la portion d'ancrage comprend des ailettes de turbine ménageant des encoches.

L'invention concerne également une tige de fixation à un support comprenant une portion de fixation, une portion d'entraînement en rotation, une portion d'ancrage, destinée à être introduite dans un trou ménagé dans le support, et des moyens de turbine, destinés à malaxer la substance d'ancrage, l'entraînement en rotation de la tige étant destiné à assurer la répartition, autour de la portion d'ancrage, d'une substance d'ancrage prévue pour durcir et ancrer la tige dans le support, tige caractérisée par le fait que la portion d'ancrage comprend des ailettes de turbine dentées.

Les encoches, ou les dents, des ailettes de turbine améliorent l'efficacité du malaxage de la substance d'ancrage.

L'invention concerne encore une tige de fixation à un support comprenant une portion de fixation, une portion d'entraînement en rotation, une portion d'ancrage, destinée à être introduite dans un trou ménagé dans le support, et des moyens de turbine, destinés à malaxer la substance d'ancrage, l'entraînement en rotation de la tige étant destiné à assurer la répartition, autour de la portion d'ancrage, d'une substance d'ancrage prévue pour durcir et ancrer la tige dans le support, tige caractérisée par le fait que les moyens de turbine présentent des motifs en relief ménagés par des sillons.

L'invention sera mieux comprise à l'aide de la description suivante d'une forme de réalisation particulière de plusieurs formes de réalisation la tige l'invention en référence au dessin annexé sur lequel:
- la figure 1 représente une vue latérale de la tige de l'invention, selon une première forme de réalisation;
- la figure 2 représente une vue en perpective de la tige de la figure 1;
- la figure 3 représente une vue en perpective de la tige de l'invention, selon une deuxième forme de réalisation;
- la figure 4 représente une vue en perpective de la tige de l'invention, selon une troisième forme de réalisation;

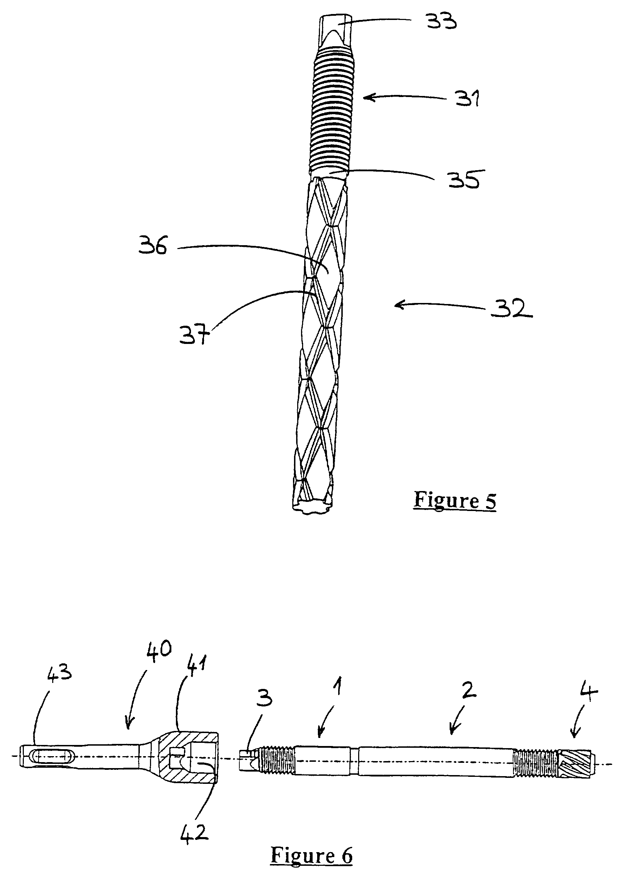

- la figure 5 représente une vue en perpective de la tige de l'invention, selon une quatrième forme de réalisation et
- la figure 6 représente une vue de côté, partiellement en coupe, d'un adaptateur destiné à adapter la tige à un outil d'entraînement.

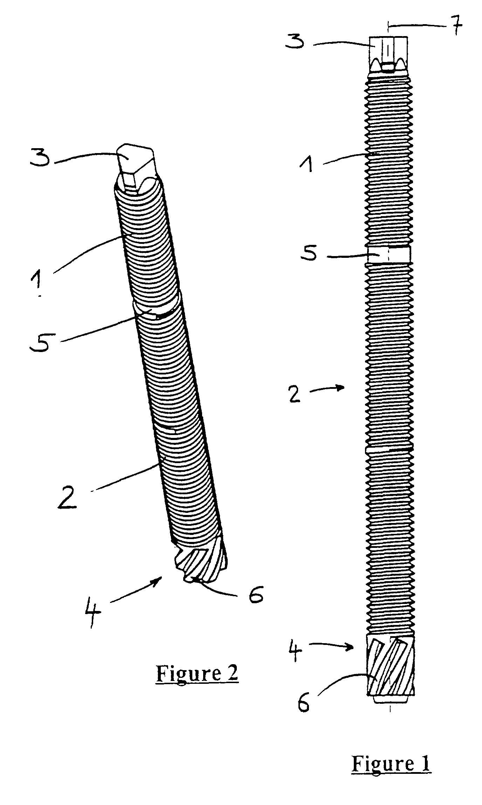

La tige de fixation, représentée sur les figures 1 et 2, ici en métal, est globalement de forme cylindrique et d'axe 7. Elle est destinée à fixer un élément à un support et comprend une portion de fixation 1 et une portion d'ancrage 2, reliées l'une à l'autre, à l'une de leurs extrémités, par une portion de liaison 5.

La tige de fixation comporte également, à son extrémité voisine de la portion de fixation 1, une portion d'entraînement 3. La portion d'ancrage 2 comprend, à son extrémité libre, une extrémité de turbine 4 constituant l'autre extrémité de la tige de fixation, opposée à l'extrémité d'entraînement 3.

La portion de fixation 1, extérieurement filetée, est destinée à faire saillie hors du support, après pose de la tige de fixation dans le support, et à supporter l'élément à fixer.

La portion de liaison 5 présente ici une surface extérieure lisse et fait fonction de repère de pose de la tige, comme cela sera explicité plus loin.

La portion d'entraînement 3 est conformée pour être reçue par un adaptateur pour outil d'entraînement et présente ici une section transversale globalement en forme de triangle tronqué à ses trois sommets.

La portion d'ancrage 2 est destinée à être introduite dans un trou préalablement percé dans un support et à y être ancrée par durcissement d'une substance d'ancrage, comme cela sera plus précisément explicité plus loin. A l'exception de l'extrémité de turbine 4, la portion d'ancrage 2 est ici extérieurement filetée.

L'extrémité de turbine 4 comprend une pluralité d'ailettes de turbine 6, rigides, en forme de portions d'hélice, disposées côté à côte tout autour de l'extrémité 4 de la tige et orientées dans des directions (qui sont les directions des tangentes des portions d'hélice) inclinées par rapport à l'axe 7 de la tige ici d'un angle d'environ 45°. Les ailettes 6 sont destinées à malaxer, brasser la substance d'ancrage, comme cela sera explicité plus loin.

L'opérateur perce au préalable un trou dans le support, sensiblement aux dimensions de la portion d'ancrage 2 avec un diamètre légèrement plus grand que celui de la tige, à l'aide d'un forêt de perçage entraîné en rotation par un outil d'entraînement, en l'espèce une perceuse agencée pour recevoir une extrémité d'entraînement du forêt. Puis, dans le trou foré, l'opérateur introduit une capsule en verre contenant une substance chimique d'ancrage comprenant ici une résine époxy, des grains de sable et un catalyseur.

Afin d'entraîner en rotation la tige, l'opérateur utilise un adaptateur 40 destiné à adapter la tige de fixation à un outil d'entraînement en rotation, en l'espèce la perceuse utilisée pour forer le trou dans le support.

L'adaptateur 40 comprend, d'un côté, une portion femelle 41 ménageant un évidement 42 de réception de la portion d'entraînement 3 de la tige de fixation, de forme complémentaire de celle de cette portion d'entraînement 3, et, de l'autre côté, une extrémité mâle d'entraînement 43 de fixation à un outil d'entraînement en rotation, conformée en extrémité d'entraînement d'un forêt de perçage. La portion femelle 41 de réception de la tige et l'extrémité mâle 43 d'entraînement de la tige forment une pièce monobloc.

L'opérateur introduit la portion d'entraînement 3 de la tige dans l'évidement 42, monte l'adaptateur 40 sur la perceuse, à la place d'un forêt de perçage, par son extrémité d'entraînement 43, introduit la portion d'ancrage 2 dans le trou, jusqu'à ce que la portion repère de liaison 5 s'étende sensiblement dans le plan de la surface du support, et entraîne en rotation la tige de fixation, en mettant en marche la perceuse.

Sous l'action de l'introduction et de l'entraînement en rotation de la tige, la capsule se brise et libère la substance d'ancrage. L'extrémité de turbine 4 broie et malaxe, brasse la substance d'ancrage avec les morceaux de verre de la capsule. Grâce à l'action des ailettes de turbine 6 entraînées en rotation, la substance d'ancrage se répand rapidement à l'intérieur du trou, en se répartissant uniformément tout autour de la portion d'ancrage 2.

Puis l'opérateur cesse d'entraîner la tige et la substance d'ancrage se durcit autour de la portion d'ancrage 2 en ancrant ainsi la tige dans le support.

L'opérateur peut alors fixer un élément sur la tige de fixation, en vissant un écrou de serrage sur la portion de fixation 1.

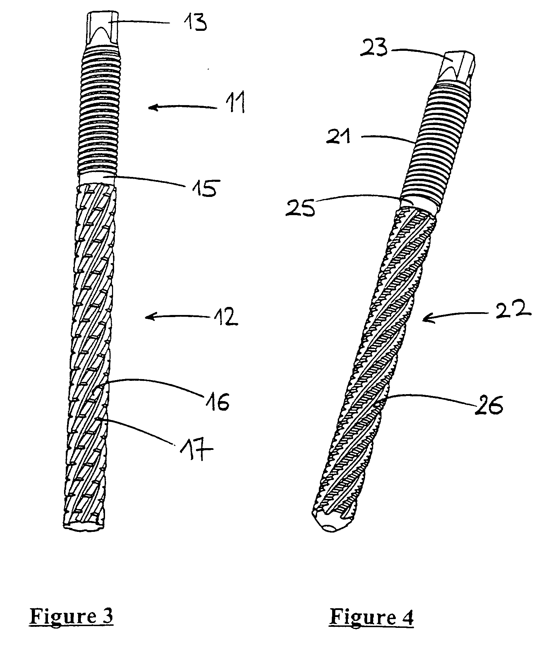

Une deuxième forme de réalisation de la tige (figure 3) ne diffère de la description qui précède que par ce qui va maintenant être décrit.

La tige comprend une portion de fixation 11, une portion d'entraînement 13 une portion d'ancrage 12 et une portion repère 15 de liaison de la portion de fixation 11 et de la portion d'ancrage 12.

La portion d'ancrage 12 comporte une pluralité d'ailettes de turbine 16 en forme d'hélices, présentant des tangentes inclinées par rapport à l'axe de la tige d'un angle sensiblement égal à 45°. Les ailettes de turbine 16 s'étendent ici sur toute sa longueur de la portion d'ancrage 12.

Des encoches 17, destinées à contribuer au brassage de la substance chimique d'ancrage et à assurer sa bonne répartition autour de la portion d'ancrage, sont ménagées dans les ailettes 16, sur toute leur étendue, à intervalles réguliers, et s'étendent dans des plans sensiblement perpendiculaires à l'axe de la tige.

La pose de cette tige s'effectue comme précédemment explicitée.

On soulignera que les ailettes de turbine 16 s'étendant sur une grande longueur de la tige (sur toute la longueur de la portion d'ancrage 12), le malaxage de la substance d'ancrage et sa répartition autour de la partie d'ancrage 12 sont encore meilleurs.

Dans une troisième forme de réalisation (figure 4) ne différant de la deuxième forme de réalisation que par ce qui va maintenant être décrit, la tige comprend une portion d'entraînement 23, une portion de fixation 21, une portion d'ancrage 22 et une portion repère 25 de liaison de la portion d'ancrage 22 et de la portion de fixation 21.

La portion d'ancrage 22 comprend des ailettes de turbine 26, en forme d'hélices ayant des tangentes inclinées à environ 45° par rapport à l'axe de la tige, s'étendant sur toute la longueur de la portion d'ancrage 22. Les ailettes 26 sont ici dentées sur toute leur étendue. Les dents, s'étendant dans des plans perpendiculaires à l'axe de la tige et proches les uns des autres, sont destinées à contribuer au brassage de la substance d'ancrage et à assurer sa bonne répartition tout autour de la portion d'ancrage.

La pose de cette tige s'effectue comme précédemment explicitée.

Enfin, dans une quatrième forme de réalisation, ne différant de la deuxième et de la troisième formes de réalisation que par ce qui va maintenant être décrit, la tige comprend une portion d'entraînement 33, une portion de fixation 31, une portion d'ancrage 32 et une portion repère 35 de liaison de la portion d'ancrage 32 et de la portion de fixation 31.

La portion d'ancrage 32 comprend des motifs en relief 36, ici en forme de losanges, ménagés par des sillons 37. Les motifs en relief 36, s'étendant sur toute la longueur de la portion d'ancrage 32, sont destinés à exercer une action de turbine afin de malaxer la substance d'ancrage et de la répartir convenablement autour de la portion d'ancrage 32.

La pose de cette tige s'effectue comme précédemment explicitée.

## Revendications

1. Tige de fixation à un support comprenant une portion de fixation (11), une portion d'entraînement en rotation (13), une portion d'ancrage (12), destinée à être introduite dans un trou ménagé dans le support, et des moyens de turbine (16), destinés à malaxer la substance d'ancrage, l'entraînement en rotation de la tige étant destiné à assurer la répartition, autour de la portion d'ancrage (12), d'une substance d'ancrage prévue pour durcir et ancrer la tige dans le support, tige **caractérisée par le fait que** les moyens de turbine (16) comprennent des ailettes (16) sur toute la portion d'ancrage (12) ménageant des encoches (17).

2. Tige de fixation à un support comprenant une portion de fixation (21), une portion d'entraînement en rotation (23), une portion d'ancrage (22) destinée à être introduite dans un trou ménagé dans le support, et des moyens de turbine (26), destinés à malaxer la substance d'ancrage, l'entraînement en rotation de la tige étant destiné à assurer la répartition, autour de la portion d'ancrage (22), d'une substance d'ancrage prévue pour durcir et ancrer la tige dans le support, tige **caractérisée par le fait que** les moyens de turbine (26) comprennent des ailettes sur toute la portion d'ancrage (22) qui sont dentées.

3. Tige selon l'une des revendications 1 et 2, dans laquelle les ailettes de turbine (6; 16; 26) sont inclinées par rapport à l'axe de la tige.

4. Tige selon l'une des revendications 1 à 3, dans laquelle les ailettes de turbine (6; 16; 26) sont en forme d'hélices.

5. Tige de fixation à un support comprenant une portion de fixation (31), une portion d'entraînement en rotation (33), une portion d'ancrage (32), destinée à être introduite dans un trou ménagé dans le support, et des moyens de turbine (36), destinés à malaxer la substance d'ancrage, l'entraînement en rotation de la tige étant destiné à assurer la répartition, autour de la portion d'ancrage (32), d'une substance d'ancrage prévue pour durcir et ancrer la tige dans le support, tige **caractérisée par le fait que** les moyens de turbine (36) présentent sur toute la portion d'ancrage (32) des motifs en relief (36) ménagés par des sillons (37).

6. Tige selon l'une des revendications 1 à 5, dans laquelle les moyens de turbine (4,6) sont prévus à une extémité libre de la portion d'ancrage (2).

7. Tige selon l'une des revendication 1 à 5, dans laquelle les moyens de turbine (16; 26; 36) s'étendent sur toute la longueur de la portion d'ancrage (12; 22; 32).

## Patentansprüche

1. Befestigungsstange an einem Träger, welche einen Befestigungsabschnitt (11), einen Rotationsmitnahmeabschnitt (13), einen Verankerungsabschnitt (12), der dazu bestimmt ist, um in ein Loch, welches im Träger ausgespart ist, eingeführt zu werden, und Turbinenmittel (16) umfaßt, welche bestimmt sind, um die Verankerungssubstanz durchzumischen, wobei die Rotationsmitnahme der Stange bestimmt ist, um die Verteilung, rund um den Verankerungsabschnitt (12), einer Verankerungssubstanz zu gewährleisten, welche zum Härten und zur Verankerung der Stange am Träger vorgesehen ist, wobei die Stange **dadurch gekennzeichnet ist, daß** die Turbinenmittel (16) Schaufeln (16), Einkerbungen (17) aussparend, über den gesamten Verankerungsabschnitt (12) umfassen.

2. Befestigungsstange an einem Träger, welche einen Befestigungsabschnitt (21), einen Rotationsmitnahmeabschnitt (23), einen Verankerungsabschnitt (22), welcher bestimmt ist, um in ein Loch, welches in dem Träger ausgespart ist, eingeführt zu werden, und Turbinenmittel (26) umfaßt, welche bestimmt sind, um die Verankerungssubstanz durchzumischen, wobei die Rotationsmitnahme der Stange bestimmt ist, um die Verteilung, rund um den Verankerungsabschnitt (22), einer Verankerungssubstanz zu gewährleisten, welche vorgesehen ist, um auszuhärten und die Stange am Träger zu verankern, wobei die Stange **dadurch gekennzeichnet ist, daß** die Turbinenmittel (26) Schaufeln, die gezahnt sind, über den gesamten Verankerungsabschnitt (22) aufweisen.

3. Stange gemäß einem der Ansprüche 1 und 2, bei welcher die Turbinenschaufeln (6;16;26) in Bezug auf die Achse der Stange geneigt sind.

4. Stange gemäß einem der Ansprüche 1 bis 3, bei welcher die Turbinenschaufeln (6;16;26) in Form von Schraubengängen sind.

5. Befestigungsstange an einem Träger, welche einen Befestigungsabschnitt (31), einen Rotationsmitnahmeabschnitt (33), einen Verankerungsabschnitt (32), welcher dafür bestimmt ist, um in ein Loch, welches in dem Träger ausgespart ist, eingeführt zu werden, und Turbinenmittel (36) umfaßt, welche bestimmt sind, um die Verankerungssubstanz durchzumischen, wobei die Rotationsmitnahme der Stange bestimmt ist, um die Verteilung, rund um den Verankerungsabschnitt (32), einer Verankerungssubstanz zu gewährleisten, welche dafür vorgesehen ist, um auszuhärten und die Stange am Träger zu verankern, wobei die Stange **dadurch gekennzeichnet ist, daß** die Turbinenmittel (36) über den gesamten Verankerungsabschnitt (32) Reliefmotive (36) aufweisen, welche durch Rillen (37) ausgespart sind.

6. Stange gemäß einem der Ansprüche 1 bis 5, bei welcher die Turbinenmittel (4,6) an einem freien Ende des Verankerungsabschnitts (2) vorgesehen sind.

7. Stange gemäß einem der Ansprüche 1 bis 5, bei welcher die Turbinenmittel (16,26,36) sich über die gesamte Länge des Verankerungsabschnitts (12,22,32) erstrecken.

## Claims

1. Fixing rod with a support comprising a fixing portion (11), a rotating drive portion (13), an anchoring portion (12), destined to be introduced in a hole fitted in the support and turbine means (16) destined to mix the anchoring substance, the rotating drive of the rod being destined to ensure the distribution, around the anchoring portion (12), of an anchoring substance planned to harden and anchor the rod in the support, rod **characterised by** the fact that the turbine means (16) comprise turbine wings (16), over the whole length of the anchoring portion (12), provided with notches (17).

2. Fixing rod with a support comprising a fixing portion (21), a rotating drive portion (23), an anchoring portion (22), destined to be introduced in a hole fitted in the support and turbine means (26) destined to mix the anchoring substance, the rotating drive of the rod being destined to ensure the distribution, around the anchoring portion (22), of an anchoring substance planned to harden and anchor the rod in the support, rod **characterised by** the fact that the turbine means (16) comprise toothed turbine wings (26) over the whole length of the anchoring portion (22).

3. Rod according to one of claims 1 and 2, in which the turbine wings (6;16;26) are inclined in relation to the rod axis.

4. Rod according to one of claims 1 to 3, in which the turbine wings (6;16;26) are helical in form.

5. Fixing rod with a support comprising a fixing portion (31), a rotating drive portion (33), an anchoring portion (32), destined to be introduced in a hole fitted in the support and turbine means (36) destined to mix the anchoring substance, the rotating drive of the rod being destined to ensure the distribution, around the anchoring portion (32), of an anchoring substance planned to harden and anchor the rod in the support, rod **characterised by** the fact that the turbine means (36) have motifs in relief (36) provided with tracks (37), over the whole length of the anchoring portion (32).

6. Rod according to one of claims 1 to 5, in which the turbine means (4, 6) are planned at a free extremity of the anchoring portion (2).

7. Rod according to one of claims 1 to 5, in which the turbine means (16;26;36) extend over the whole length of the anchoring portion (12;22;32).
